# EUROPEAN PATENT APPLICATION

(11) **EP 3 437 461 A1**
(43) Date of publication of application: **06.02.2019**
(21) Application number: 18186226.9
(22) Date of filing: 30.07.2018
(51) Int. Cl.: A01G 13/02

(54) **DEVICE FOR PROTECTING POT PLANTS**

(30) Priority: 02.08.2017 NL 2019388
(71) Applicant: A.J.M. de Koning Beheer B.V., 2631 NA Nootdorp (NL)
(72) Inventor: DE KONING, Adrianus Johannes Maria, 2631 NA Nootdorp (NL)
(74) Representative: Algemeen Octrooi- en Merkenbureau B.V.

(57) **Abstract**

The present invention relates to a protective device for protecting a plant (50) to be raised/matured in a pot (7) containing growth medium, the protective device comprises a tubular body, such as a vase or a collar (1), which at least partly surrounds a plant (50) growing in growth medium during use. The invention furthermore relates to a method for raising/maturing a plant (50) to be raised/matured in a pot (7) containing growth medium.

## Description

According to a first aspect, the present invention relates to a protective device for protecting a plant to be raised/matured in a pot containing growth medium, the protective device comprises a tubular body, such as a vase or a collar, which at least partly surrounds a plant growing in growth medium during use.

It is known to raise plants in a pot containing growth medium, in which case, on a commercial basis, preferably as many plants per m² as possible are raised from an economic point of view. When raising/maturing plants on a large scale, there is a risk of branches, leaves and/or roots of adjacent plants coming into contact with each other or even becoming entangled with each other. This is particularly true of orchids. To this end, it is known to place plants together with the growing pot in a vase which extends so far above the growing pot that it largely surrounds the plant and protects the branches or leaves against contact with adjacent plants during maturation. Alternatively, it is known to place a collar on the growing pot which has the same effect as a vase. In order to prevent an unnecessarily large amount of light from not reaching the plants during raising/maturing, vases or collars are generally transparent. The drawback of the above technique is that despite branches not being able to become entangled with adjacent plants, they may still become entangled in the tubular body itself, due to the fact that branches encounter their own leaves when growing upwards from the leaf axils and these frequently block the way up. As a result thereof, the branch may eventually break spontaneously or become stuck between two leaves which are situated one above the other or the branch may even break during processing of the end product.

In particular with orchids, the flowering characteristic is an important aspect, with the number of branches and flowers and the shape and direction of the branches and flowers partly determining the (market) value of an orchid. The present invention therefore aims to provide a protective device according to the preamble, by means of which the growth process of a plant may be influenced, in particular by means of which it is possible to promote straighter growth of the branches of the plant than is the case in a known device. According to the present invention, this object is achieved by means of a protective device according to Claim 1. Since the tubular body comprises, at least above the growth medium, a plant-facing inner wall with a first section and a second section, wherein the first section and the second section have mutually different light-reflecting properties for influencing the growth direction and/or the growth process of the plant, it is possible to influence the growth of the plant/branch in a targeted way by correctly orienting the tubular body with respect to the plant.

Leaves and branches of a plant tend to grow in the direction of the light. If a plant is matured surrounded by a tubular body according to the present invention, a branch will grow in the direction of the section which reflects light relatively well or absorbs relatively little light or allows little light through. This may be assisted by the fact that, during the raising stage, in which it is desirable for the plants to only grow vegetatively, the leaves partly also turn away from the dark side and thus generate more space on the other side. It is also possible to change the orientation of the sections/partial faces with the different light-reflecting properties with respect to the plant during various growth stages of a plant, in order to enable the plant to grow and/or flower in an optimum manner. For example by placing one side of the plant facing a section which reflects the light relatively well during the raising stage, and by placing the opposite side of the plant facing the section reflecting the light relatively well during the maturing stage.

Thus, the growth direction and/or the growth process of branches can be influenced by means of the protective device according to the present invention in such a way that the risk of the plant growing crooked due to its own leaves is minimized or at least reduced. Specifically with Phalaenopsis, branches shoot from a leaf axil between two leaves which have developed horizontally partly one above the other, after which the branch in the shadow of the leaf situated above it will start to grow upwards (towards light). Due to the protective device according to the present invention, it is possible to force the newly formed branch to grow into one direction from underneath the covering leaf. By forcing the branches, they will start to grow upwards between the leaves, now forced into the 'open space' on one side of the plant, instead of sideways in the longitudinal direction of the leaf. As a result thereof, there are not only fewer cases of branches breaking/growing crooked, but various other advantages, such as a saving in labour when tying up branches, due to the fact that the branches have grown upwards in a straighter manner and, in addition, it thus becomes possible to supply certain varieties without a stick.

In one embodiment, the inner wall of the tubular body is provided with an inner surface, which inner surface comprises at least one first surface portion forming the first section and one second surface portion forming the second section, wherein the first surface portion and the second surface portion have mutually different light-reflecting properties. It is, for example, possible to make the first surface portion darker in colour than the second surface portion for influencing the growth direction and/or the growth process of the plant, or make the first surface portion have a matter surface than the second surface portion. In general, a relatively matt surface reflects light to a lesser degree, at least differently, than a relatively shiny surface. In this way, the grower can determine and influence the growth direction and/or the growth process of the plant in a relatively simple and cost-effective manner.

The expression different light-reflecting properties in this document is understood to mean that the first and second section or the first and the second surface portion have different light-reflecting properties under identical (measurement) circumstances (such as identical angle, identical strength of the incident light beam, etc.).

The light-reflecting properties may be determined in different ways, such as for example by colour, shine and/or surface structure.

In another aspect of the invention, the tubular body has a cross-sectional plane which extends perpendicular to the centre axis and may not comprise any corners or may be provided with a cross-sectional plane with corners. An example of a cross-sectional plane without corners is a circular or elliptic cross-sectional plane. An example of a cross-sectional plane with corners is a rectangular or hexagonal cross-sectional plane. It is also possible for the tubular body to be provided at different heights thereof with at least one cross-sectional plane with corners and with at least one cross-sectional plane without corners. A tubular body with an angular multilateral cross-sectional plane can support branches when growing upwards in a desired direction by the fact that a branch can be guided upwards in a straight line by a corner which is enclosed by two adjacent surfaces.

When the tubular body extends in a divergent manner in a direction of the centre axis thereof in a growth direction of a plant surrounded by the tubular body, the plant has more space to grow on the top side than on the bottom side. In addition, with this divergent shape, it is possible to prevent branches on the bottom side of the plant from growing outwards, which is to say that the branches on the bottom side of the plant can be forced to grow upwards.

In a further aspect, the first section and the second section are separated from each other by at least one dividing line, preferably two dividing lines, in order to form two sections which, viewed in the peripheral direction of the protective device, are situated one behind the other. The dividing line or dividing lines may extend substantially parallel to the centre axis of the tubular body. Obviously, the dividing line does not have to run completely parallel to the centre axis of the tubular body in order to obtain the different sections around the plant. By means of such a configuration of the sections of the protective device, it is possible to influence the growth direction and/or the growth process of the leaves and/or the branches of the plant during the raising/maturing process by rotating the protective device, in particular the tubular body, about its centre axis with respect to the plant.

The light-reflecting properties of the sections or the surface portions may relate to the ratio of the incident light with respect to the reflected light, for example the ratio between light reflection and light absorption and light transmission, the direction of the reflected light, such as for example the main direction of the light reflection and/or the colour or colours of the reflected light. In this case, the different sections/surface portions may exhibit differences in reflective or absorptive intensity of the light, but it is also possible that the first section/the first surface portion absorbs certain colours better and other colours less well than the second section/the second surface portion. Thus, it is possible that the different light-reflecting properties in the first section and the second section have been created by using different colours for the first section and the second section, for example the colour black for the first section and white for the second section or the colour blue for the first section and red for the second section.

It is preferred if, in terms of surface, the first section and the second section each extend over at least 25% of the inner wall of the tubular body. A surface area ratio of 1:1 to 1:3 between both sections results in a desired degree of difference of light-reflecting properties between both sections. Incidentally, it is not necessary for the first section and the second section to comprise or cover the entire inner wall of the tubular body. It is also possible for there to be more than two sections having different light-reflecting properties.

If the tubular body is manufactured by means of injection-moulding, it is preferred if it is manufactured by means of two-colour injection-moulding. It is also possible to manufacture the tubular body by means of "in-mould labelling (IML)". Thus, it is possible to obtain a tubular body according to the present invention without an injection-moulded tubular body or a tubular body obtained via IML requiring any after-treatment in order to obtain the desired differences in the light-reflecting properties.

In a further aspect, at least one section of the first and the second section is formed by an aperture in the tubular body, with the aperture forming an opening in the tubular body through which light can impinge directly on the plant.

The aperture forms an opening in the tubular body, preferably the surface of the opening is at least 10-20% of the outer surface of the tubular body. This aperture is particularly advantageous during maturation, that is to say the stage in which the branches of the plant start to grow. Due to the aperture in the side wall of the tubular body, the incident daylight or artificial light impinges directly on the plant without the use of the tubular body. In this way, the growth direction and/or the growth process of the plant can be influenced, in particular the growth direction and/or the growth process of the branch can be influenced to an even greater degree, by using the light which impinges directly on the plant. Therefore, the aperture may form the first section of the inner wall, in which case the second section is formed by at least a part of the inner wall of the tubular body, with the two sections having different light-reflecting properties, that is to say the first section has no light-reflecting properties, whereas the second section does have light-reflecting properties. In this case, it is possible to design the second section such that it reflects less light than at least a part of the tubular body in which the aperture is situated. As a result of such a design, the tubular body comprises at least three sections with mutually different light-reflecting properties.

In a further aspect, at least one section of the first and the second section is formed by fitting an element in front of or on the inner wall of the tubular body.

Fitting this element, preferably a band-shaped or strip-shaped element, may be performed in any desired way in an integrated way, by means of fastening (for example gluing) or even in a separate way. In the latter case, it would be possible, by means of fitting one or two ancillary elements, which are placed, from a plant surrounded by the protective device, in front of, i.e. on the inside of, the tubular body in a growth medium in order to obtain sections with different light-reflecting properties in the actual tubular body.

With a transparent tubular body, it is alternatively or additionally possible for at least one section of the first and the second section to be formed by fitting an element for changing the light-reflecting properties between the first and the second section on an outer side of the tubular body. In this way as well, the light-reflecting properties of the sections of the tubular body can be adjusted indirectly by means of at least one element, preferably a band-shaped or strip-shaped element.

According to a second aspect, the invention relates to a method for raising/maturing a plant to be raised/matured in a pot containing growth medium. According to the present invention, an above-described protective device is used with the method. The advantages of such a method correspond to the advantages of a protective device according to the first aspect of the invention.

In this case, it is preferred for the plant to be turned with respect to the protective device between the raising and maturation (also known as preparation for sale or induction stage), for example turned by 180 degrees, about the centre axis of the plant between raising in the hot stage (for example at a temperature of approximately 28 degrees Celsius) and maturation (preparation for sale) in the cool stage (for example at room temperature). As has already been mentioned above, this results in the leaves, during raising, growing more towards the side which reflects light relatively well, at least compared to a known raising method, and the branches of the plant in turn growing more towards the side which reflects relatively well, after the plant has been turned during the maturing stage, at least compared to the known maturing method. By combining the sections of turning the plant during the various maturing stages of raising/maturing the plant, it is possible to create more space for the branches to grow during maturation than with the known maturing method.

It is preferred if the plant and the protective device are positioned at an angle, that is to say to the centre axis, during raising/maturing of at least 10-60 degrees with respect to the vertical in order thus to influence the growth direction and/or the growth process of the plant. Preferably, the angle between the vertical and the centre axis of the protective device containing the plant is 20-45 degrees. In this case, the leaves and/or branches of the plant have the tendency to grow "upwards" and thus to orient themselves in a (vertical) direction. By in this case orienting the tubular body in such a manner that the surface portion which reflects light relatively well is situated on the top side, the effects of the protective device according to the present invention and the oblique positioning may be mutually magnified. This applies both to the raising stage for the leaves and to the maturing stage for the branches.

With this maturing method, the protective device which has already been described above and which is provided with a tubular body with an aperture can be used in an advantageous manner. This aperture is particularly advantageous during maturation, that is to say the stage in which the branches of the plant start to grow. By orienting the aperture in the side wall of the tubular body higher than the oblique centre axis, the amount of daylight or artificial light which is directly incident on the plant is increased during use, as a consequence of which the growth direction and/or the growth process of the plant, in particular the branch, can be influenced to an even greater degree.

Incidentally, positioning the plant and the protective device obliquely at an angle to the vertical may also be used advantageously independently from the above-described protective device with sections which have mutually different light-reflecting properties, for example with a known protective device comprising a translucent/transparent tubular body in the form of a vase or a collar without a first section and a second section having mutually different light-reflecting properties. With such a method for raising and/or maturing a plant to be raised or to be matured in a pot containing growth medium, the plant in the pot is surrounded by a, preferably transparent, tubular body of a protective device, in which the protective device, together with the plant, is positioned at an angle, that is to say to the centre axis, during raising/maturing, of between 10-60 degrees with respect to the vertical, in order thus to influence the growth direction and/or the growth process of the branch/plant. Preferably, the angle between the vertical and the centre axis of the protective device containing the plant is 20-45 degrees.

The methods described herein are particularly advantageous for the raising/maturing of orchids, in particular Phalaenopsis.

It is also advantageous for each of the methods described herein to change the angle with respect to the vertical and the protective device with the plant during growth, and/or to position the plant with another side upwards during the maturing stage, that is to say, relatively directing it more upwards with respect to the other side of the plant, than during the preceding raising/maturing stage. Changing the side of the plant which is situated at the top is possible by rotating the plant with respect to the tubular body, preferably in a direction of rotation about the centre axis of the tubular body.

The above-described aspects will be explained below by means of a number of exemplary embodiments in combination with the figures. However, the invention is not limited to the exemplary embodiments described below. Rather, a number of variants and modifications are possible which also use the inventive idea and thus fall within the scope of protection. The possibility of combining the properties/aspects which are only mentioned in the description and/or are illustrated in the figures with the properties of the claims, insofar as compatible, should be mentioned in particular.
Figs. 1a,b show perspective views of a first embodiment of a protective device;
Fig. 2 shows a perspective view of a second embodiment of a protective device;
Fig. 3a shows a perspective view of a third embodiment of a protective device with a growing pot containing a plant positioned therein;
Fig. 3b shows an element which is usable with a protective device;
Figs. 4a-c diagrammatically show the growth process of a plant positioned in Fig. 3;
Fig. 5 shows a side view of a protective device, the design of which corresponds to the protective device illustrated in Fig. 2, in which the protective device contains a diagrammatically shown orchid, more specifically a Phalaenopsis;
Fig. 6 shows a top view of the protective device illustrated in Fig. 5;
Fig. 7 shows a top view of a protective device illustrated in Fig. 1a containing a diagrammatically shown orchid, more specifically a Phalaenopsis;
Figs. 8a,b show, highly diagrammatically, the growth process of the leaf growth of an orchid, more specifically a Phalaenopsis, in a protective device illustrated in Figs. 4a-c;
Fig. 9 shows a perspective view of a fourth embodiment of a protective device containing a diagrammatically illustrated orchid, more specifically a Phalaenopsis;
Fig. 10 shows a perspective view of a fifth embodiment of a protective device containing a diagrammatically illustrated orchid, more specifically a Phalaenopsis;
Fig. 11 shows a number of protective devices illustrated in Fig. 10 positioned in a growing rack.

In the figures, similar components are denoted by the same reference numerals. The figures show different embodiments of a protective device. Similar to the known vase-shaped or collar-shaped protective devices described in the introduction of this document, the basic task of the protective device is to protect the plants growing in a growing pot against contact with adjacent plants in order to prevent, for example, entanglement (contact) between different plants as much as possible.

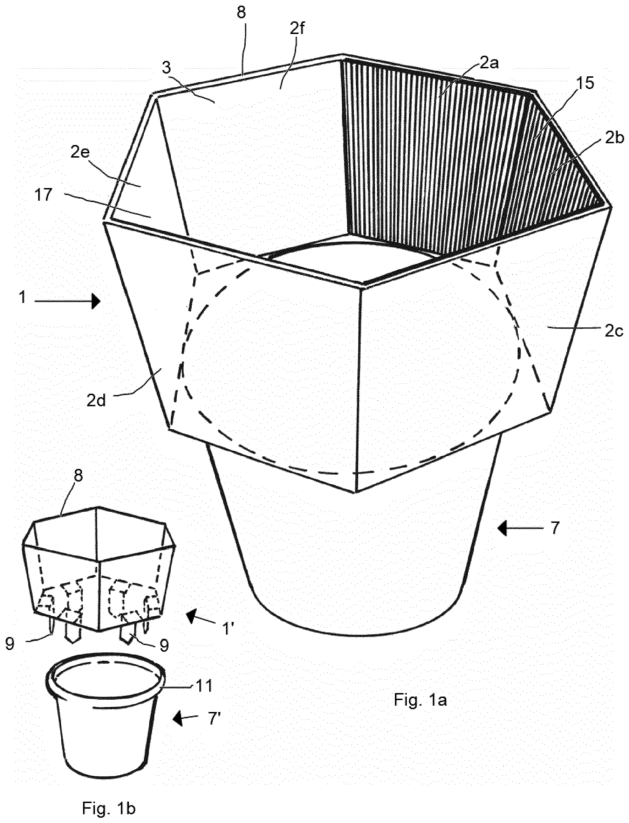

Fig. 1a shows a protective device in the form of a collar 1 comprising six sides. The six rectangular sides 2a-f of the tubular collar 1 together form an inner wall 3 around a virtual centre axis of the collar 1.

As is shown in Fig. 1a, the collar 1 may be connected to a growing pot 7 so as to form a single part or the collar 1' may, as is shown in Fig. 1b, be detachably fastened to a growing pot 7' by, for example, clamping by means of flanges 9. In Fig. 1b, the flanges 9 are configured in such a way that they are detachably fastened around the edge 11 on the inner side of the growing pot 7', but it is obviously also possible to configure the flanges (not shown) such that they are detachably fastened around the edge 11 on the outer side of the growing pot 1'. It is furthermore possible to use other detachable fastenings, such as for example a click-fit mechanism (not shown) for detachably fastening the collar and the growing pot.

In the following description, the collar 1, 1' and the growing pot 7, 7' illustrated in Figs. 1a,b are referred to as collar 1 and growing pot 7.

The growing pot 7 has the shape of an inverted truncated cone, as a result of which the diameter of the bottom of the growing pot 7 is smaller than the diameter of the edge 11 of the growing pot 7. It is also possible to use a growing pot (not shown) which is provided with corners or a cylindrical growing pot (not shown).

The collar 1 has the shape of an inverted truncated hexagonal pyramid, so that the collar 1 extends in a divergent manner in a direction of the centre axis thereof in a growth direction of a plant to be surrounded by the collar 1. In other words, a hexagonal cross-sectional surface of the collar 1 near the growing pot 7 or near the bottom side of the collar 1 is smaller than a hexagonal cross-sectional surface near the top edge 8 of the collar 1.

Three of the six rectangular sides 2a-c form a part of the inner wall 3 which forms a first section 15 of the collar 1, while the other three rectangular sides 2d-f form a second section 17 of the inner wall 3 of the collar 1. The first section 15 and the second section 17 differ from each other in that they have different light-reflecting properties for influencing the growth direction and/or the growth process of a plant growing in the growing pot 7 (not shown in Figs. 1a,b).

The different light-reflecting properties may be achieved by providing the surface portion of the first section 15 facing the centre axis with a different colour, shine and/or surface structure than the surface portion of the second section 17 facing the centre axis.

The hatching of the surface portion of the first section 15 indicates, for example, a black surface portion, while the lack of hatching of the second section 17 indicates a white surface portion. In this case, other colour combinations between the first section 15 and the second section 17 for influencing the growth direction and/or the growth process of a plant are also possible. For orchids, in particular Phalaenopsis, it has been found that, in practice, for example the colour combination red and blue also works well in order to influence the growth direction and/or the growth process.

In the exemplary embodiment shown in Fig. 1a, less daylight or artificial light incident on the first section 15 indicated by the hatching is reflected in the direction of the centre axis of the collar 1 than by the second section 17.

The illustrated sections 15, 17 each form virtually 50% of the inner surface of the inner wall 3 of the collar 1. The surface ratio between the first section 15 and the second section is thus 1:1.

It is also possible for at least one of the sections 15, 17 to form less than 50% of the total inner surface of the inner wall 3 of the collar 1, in which case the surface ratio between the first section 15 and the second section 17 may also deviate from the ratio 1:1. It is preferred if the first and the second section each form at least 25% of the total inner surface of the wall, in which case a surface area ratio which is between 1:1 and 1:3 results obtaining a desired degree of difference in light-reflecting properties between the sections 15, 17. By way of example, only two of the six rectangular sides may form a first section of the inner wall 3 of the collar 1, while the other four rectangular sides form the second section of the inner wall 3 of the collar 1, the surface area ratio therefore being 1:2.

In the illustrated exemplary embodiment of the collar 1, the latter comprises six rectangular sides 2a-f which are virtually identical as regards shape and surface. However, it is also possible for the collar 1 to have at least one rectangular side (not shown) which has a greater surface than another rectangular side. For example, the two mutually facing rectangular sides 2a, 2d may form a greater rectangle with a larger surface area than the other sides 2b, 2c, 2e, 2f. Other configurations of the six sides of the collar 1 are also possible.

It is also possible for the collar to have more than two sections (not shown) which have mutually different light-reflecting properties. This may be the case, for example, if the first section 15 and the second section 17 do not form the total inner surface area of the inner wall 3 of the collar 1, as a result of which the rest of the inner surface of the inner wall 3 forms a third section (not shown).

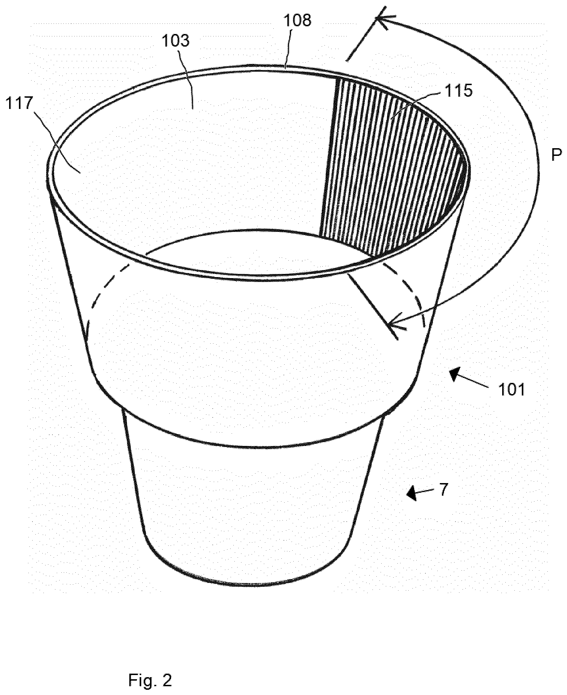

Fig. 2 shows another embodiment of the protective device, that is to say a differently designed collar 101. The collar 101 has the shape of an inverted truncated cone, so that the collar 101 extends in a divergent manner in a direction of the centre axis thereof in a growth direction of a plant (not shown in Fig. 2) to be surrounded by the collar 101. In other words, a circular cross-sectional surface of the collar 101 near the growing pot 7 or near bottom side of the collar 101 and comprising no corners is smaller than a circular cross-sectional surface near the top edge 108 of the collar 101. The collar 101 may be detachably attachable to the growing pot 7 or may be designed to form a single part with the growing pot 7.

The collar 101 comprises an inner wall 103 with a first surface portion forming the first section 115, and a second surface portion forming the second section 117. The second surface portion is greater than the first surface portion, more particularly, the surface of the first section 115 denoted by the arrow P is approximately 1/3 of the total inner surface area of the inner wall 103, while the surface of the second section is approximately 2/3 of the total inner surface area of the inner wall 103. The hatching indicates the difference in reflection properties between the first section 115 and the second section 117 in a similar way to Figs. 1a,b.

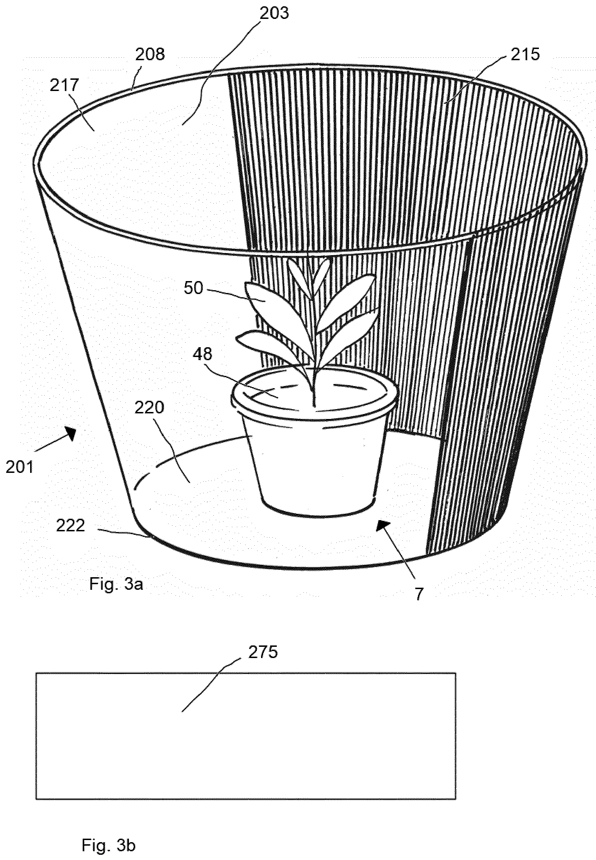

Fig. 3a diagrammatically shows a third embodiment of a protective device. The protective device is a vase-like construction, simply referred to as vase 201. In contrast to the collar 1, 101, the tubular vase 201 comprises a bottom 220. On the bottom 220 of the vase 201, a growing pot 7 is positioned which is filled with growth medium 48 and is provided with a plant 50 growing in the growth medium 48. In practice, the vase 201 illustrated diagrammatically in Fig. 3a is smaller than illustrated with regard to dimensons (height, diameter) when used by a grower as a growing vase (not shown), that is to say that the dimensions of the growing vase may be adapted to the dimensions of the growing pot 7. For example, the height of the growing vase may be approximately one and a half to two and a half times the height of the growing pot 7 and the smallest diameter of the growing vase will at most be 1-10% larger than the largest diameter of the growing pot 7.

The bottom 220 of the vase 201 has a bottom edge 222. The vase 201 furthermore has a top edge 208 as well as a side wall which extends between the bottom edge 222 and the top edge 208 as a truncated cone and which also forms the inner wall 203 of the vase 201.

The inner wall 203 comprises a first surface portion indicated by hatching which forms the first section 215 and a second surface portion indicated without hatching which forms the second section 217. Similar to the embodiments of the protective devices illustrated in Figs. 1 and 2, the first section 215 has other light-reflecting properties than the second section 217. In the vase 201 illustrated in Fig. 3, the inner wall is formed by the first section 215 and second section 217, in a surface ratio of 1:1.

Fig. 3b shows an element 275 which may be attached to the inner wall 203, for example glued, to form a section of the inner wall 203 which has different light-reflecting properties than another section 215, 217 of the inner wall 203, for example formed by the surface of the inner wall itself. It is also possible for the element 275 to be placed loosely in front of or against the inner wall 203 to provide a further section. If the wall of the vase 201 which forms the inner wall is transparent or translucent, it is also possible to arrange the element 275 on an outer side of the vase 201. It is also possible to provide the element 275 with the same light-reflecting properties as the first section 215 or the second section 217. It is furthermore possible to form the entire first section 215 or the entire second section 217 using the element 275 or a number of identical elements 275.

The element 275 may be designed as a band-shaped or strip-shaped covering element, for example a film, or a paper, plastic or metal band/strip. If desired, the film or the band/strip may additionally be provided with a colour in order to form a desired section of the inner wall of vase 201 for influencing the growth direction and/or the growth process of the plant. The element 275 may be used in every embodiment of the protective device described and/or illustrated in this document in order to form a section of an inner wall which has other light-reflecting properties than at least one other section of the inner wall.

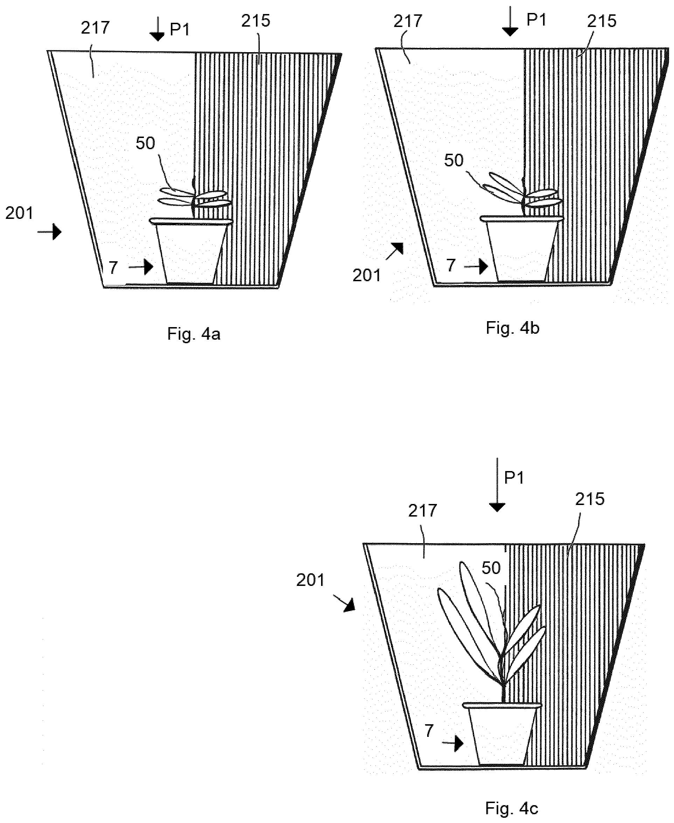

Figs. 4a-c explain how the protective device, in the form of the vase 201, is used to influence the growth direction and/or the growth process of the plant 50. The first section 215 is formed by a black inner surface of the inner wall 203, while the second section 217 is formed by a white inner surface of the inner wall 203. In Fig. 4a, the growing pot 7 together with the plant 50 is positioned at the bottom 220 of the vase 201. The direction of the incident daylight or artificial light, diagrammatically indicated by the arrow P1, will be reflected to a greater degree by the white second section 217 in the direction of the plant 50 than the black section 215. In the black first section 215, the light is absorbed to a greater degree than in the white second section. Due to the first 215 and second section 217, the plant will receive more light on the side of the vase 201 which is shown on the left in the figures than on the side of the vase 201 which is shown on the right. Depending on the plant 50, the plant 50 will react to the differences in light. A possible reaction which may occur over a certain period of time with a certain plant, is that the leaves will grow to a slightly greater degree on the lighter left-hand side in the vase 201 and that they will be directed upwards to a greater degree than the leaves on the darker right-hand side of the vase 201. This effect which is due to the different light reflections of the sections 215 and 217 is diagrammatically illustrated in Figs. 4b and 4c. The effects of the vase 201 illustrated in Figs. 4a-c are only intended to be illustrative and may turn out to be different, depending on the type of plant which is used in combination with the vase 201.

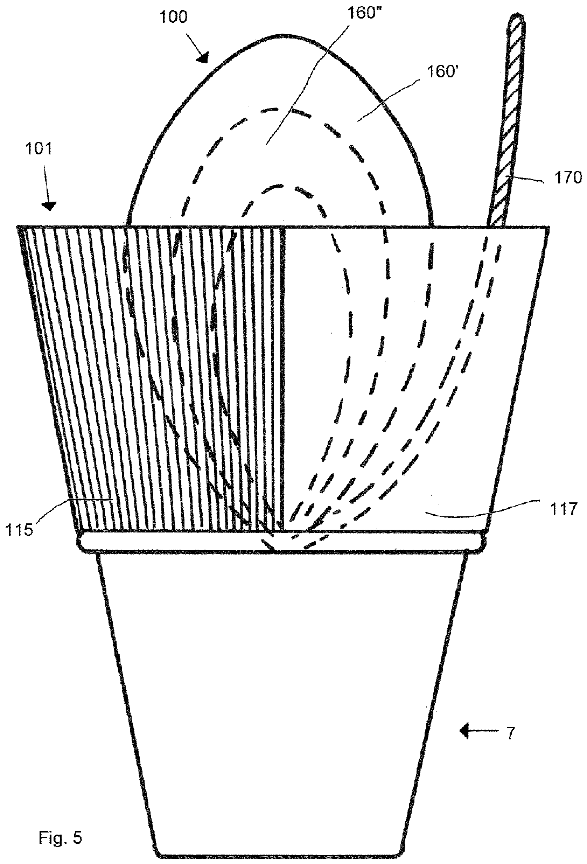

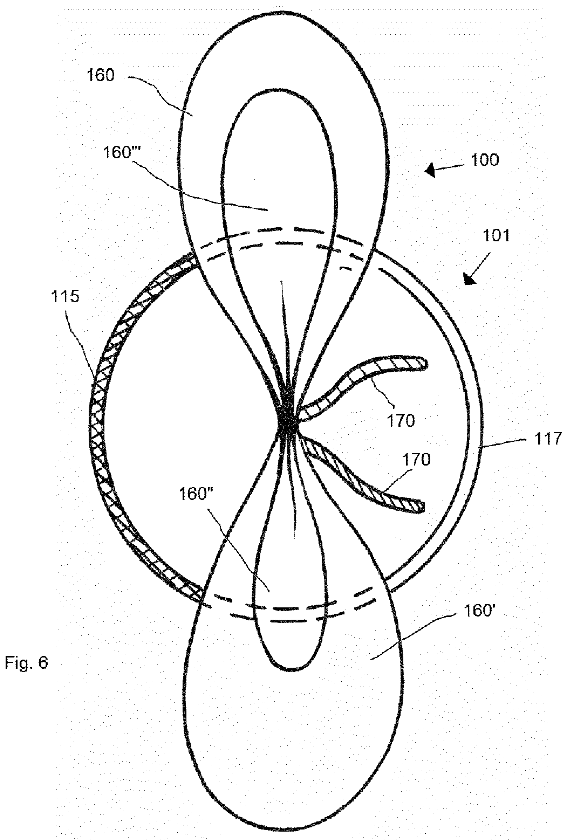

Figs. 5 and 6 show a side view and a top view of a protective device, the shape of which corresponds to the protective device illustrated in Fig. 2. The protective device illustrated in Figs. 5 and 6 in the form of a collar 101 containing a diagrammatically illustrated orchid, more specifically a Phalaenopsis 100, does comprise a first section 115 and a second section 117, each of which forms 50% of the inner surface of the inner wall 103.

Maturation of Phalaenopsis 100 comprises two maturing stages, a first raising stage, in which the leaves of Phalaenopsis 100 grow at a first temperature and a maturing stage in which the branches grow at a second temperature which is lower than the first temperature. The first temperature is approximately 28 degrees, while the second temperature is approximately room temperature.

Figs. 5 and 6 show the second maturing stage. In this case, the leaves have grown in such a way during the raising stage on both sides from the centre, optionally with the use of a protective device described in this document, that leaves 160, 160'; 160", 160"' result after the raising stage, the longitudinal direction of which is situated more or less on a straight line running through the centre.

Specifically with Phalaenopsis, the branches 170 shoot from a leaf axil between two leaves 160', 160" situated one above the other, after which the branch will continue to grow upwards (towards light) in the shadow of the leaf situated above it.

Due to the collar 101, it becomes possible to force the newly formed branch 170 to grow away from the leaf 160', 160" situated above it and into one direction during the maturing process, namely towards the second section 117 of the inner wall 103 of collar 101 which reflects light to a greater degree and more efficiently than the first section 115. This forcing action makes it possible for branches 170 to now be forced upwards into an 'open space' on one side (the right-hand side of the Phalaenopsis 100 illustrated in Fig. 6) of the plant, instead of growing upwards between the leaves laterally, in the longitudinal direction of the leaf. This has, inter alia, the advantage that the branches 170 will grow upwards in a less curved manner.

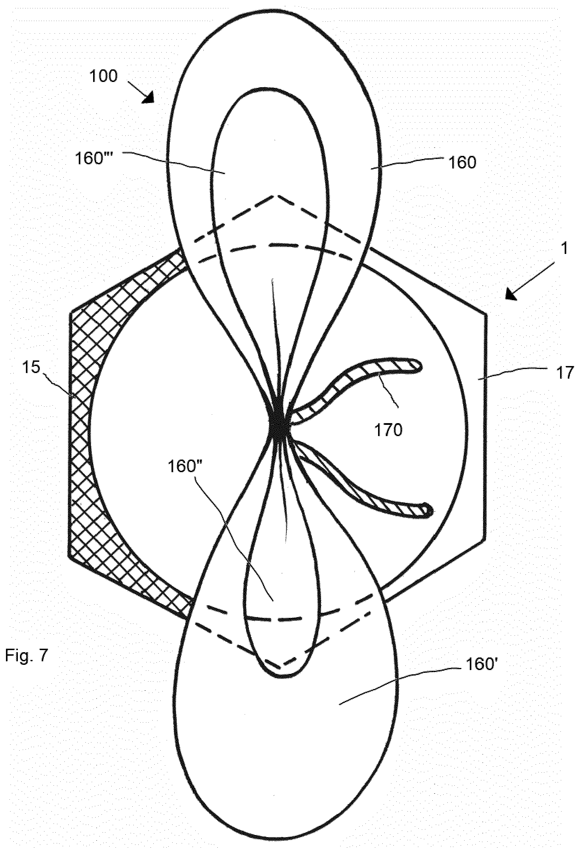

Fig. 7 shows a top view of a protective device illustrated in Fig. 1a, that is to say collar 1, containing a diagrammatically illustrated orchid, more specifically a Phalaenopsis 100. In a way similar to Fig. 6, this figure shows how the growth direction and/or the growth process of the branches 170 is influenced by the second section 17 of the inner wall 8 of the collar 1.

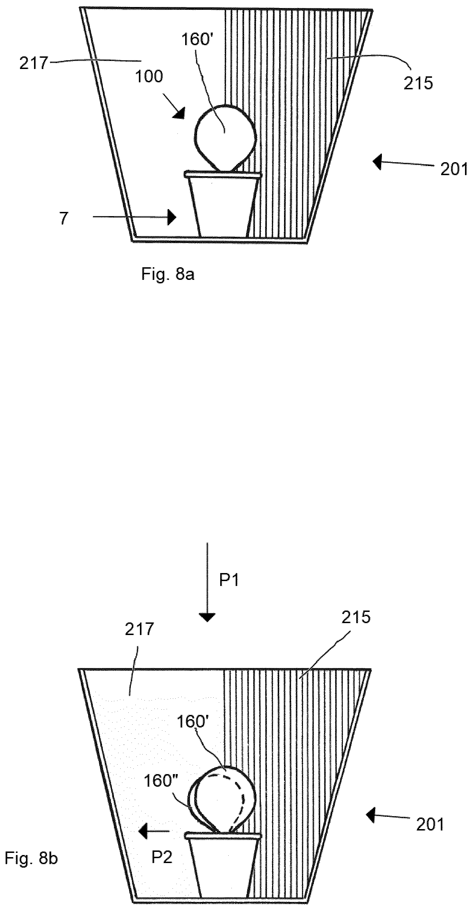

Figs. 8a,b show in a highly diagrammatic way, a possible raising process for growing leaves on an orchid, more specifically a Phalaenopsis 100, by using a protective device illustrated in Figs. 3a and 4a-c in the shape of the vase 201 if it is desired to cause the leaves which are situated one above the other to be slightly mutually offset with respect to the longitudinal direction thereof.

Fig. 8a shows the moment in the raising process where the leaf 160' is visible and before or just after a second leaf 160" which is to grow above the first leaf is about to sprout or has sprouted. At any rate, this second leaf 160" which is yet to grow is still so small that it has not been illustrated in Fig. 8a. The leaves 160, 160'" which are situated opposite each other with respect to the centre of the plant, as is shown in Figs. 6 and 7, have not been shown for the sake of making the growth process clearer. However, the growth process of these non-illustrated leaves 160, 160'" takes place in a similar way to the growth process to be described below.

The influence of the sections 215, 217 of the inner wall of the vase 201 on the essentially fully grown first leaf 160' are minimal or even zero.

As has been shown highly diagrammatically in Fig. 8b, due to the second section 217 which reflects the light more efficiently than the first section 215, the second leaf 160" will start to grow towards the second section 217 in such a way that the length direction of the second leaf 160" is slightly offset with respect to the longitudinal direction of the first virtually fully grown leaf 160' situated underneath. The longitudinal directions of the two leaves 160', 160" thus enclose a small angle (<10 degrees) with each other.

In addition, the offset of the second leaf 160" may be kept to a minimum by the grower by turning the plant 180 degrees about its centre axis with respect to the vase 201 for a relatively short period between the maturing stages illustrated in Figs. 8a and 8b if the offset risks to become excessively large. By turning the plant 180 degrees, the second leaf 160" comes to lie more in the first section 215 for a relatively short period, as a result of which the ongoing offset in the direction of the second leaf 160" indicated diagrammatically by arrow P2 can be restrained. If a greater offset than is illustrated in Fig. 8b is desired, the grower should rotate the plant less often, if at all, during the growth process between Figs. 8a and 8b.

The illustrated collar 1, 101 and vase 201 may be manufactured by means of injection-moulding, more specifically by means of two-colour injection-moulding, in order to provide the first section 15, 115, 215 and the second section 17, 117, 217 which have mutually different light-reflecting properties. In this way, it is possible to obtain a tubular protective device according to the present invention without having to perform an after-treatment in order to obtain the desired differences in the light-reflecting properties.

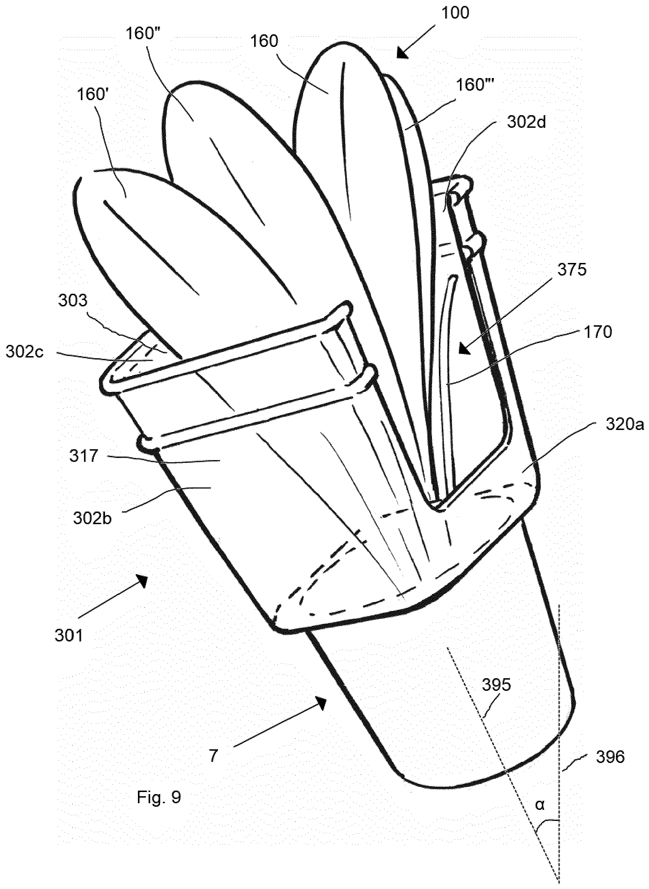

Fig. 9 shows a perspective view of a fourth embodiment of a protective device containing a diagrammatically illustrated orchid, more specifically a Phalaenopsis 100. The protective device is a collar 301 with a truncated inverted quadrangular pyramid shape, as a result of which a rectangular or square cross-sectional surface through the collar 301 near the edge 8 is larger than a rectangular or square cross-sectional surface through the collar 301 which is situated more in the direction of the growing pot 7. The collar 301 may be detachably attached to the growing pot 7 or form a single part therewith.

The collar 301 comprises an aperture in the form of an opening 375. The opening 375 is delimited by edges 380 of the collar. The opening 375 may be manufactured by machine, but it is also possible to manufacture the opening in situ by means of tools, for example a blade or the like. It is also possible to configure a protective device, such as a collar or a vase, in such a way that a part of the wall of the tubular body can be broken away by means of pre-made perforations, for example manually, in order to provide the aperture and the opening in the protective device. The opening may be made, for example, just before the maturing stage of the branches, so that the collar 301 does not have an opening during the raising stage of the leaves. The edges of the opening define a U shape. In this case, other shapes of the opening, such as for example a drop shape, are also possible. Through the opening in the side wall 302a of the collar 301, the incident daylight or artificial light impinges directly on the plant without the use of the collar 301. In this way, by using the light which impinges directly on the plant, the growth direction and/or the growth process of the plant can be influenced, in particular the growth direction of branches of a Phalaenopsis 100 can be influenced to an even greater degree. The opening 375 may form the first section of the inner wall, in which case the second section 317 is formed by the inner wall 303 of the collar 301, the two sections having different light-reflecting properties, that is to say the first section formed by the opening 375 does not have any light-reflecting properties, whereas the second section 317 formed by, for example the inner walls of the side walls 302b,c,d, does have light-reflecting properties. In this case, it is also possible to configure the second section 317 such that it reflects less light than at least a part 390 of the collar 301 in which the aperture is situated, that is to say the inner wall of the side wall 302a. Due to this embodiment, the collar 301 comprises three sections having mutually different light-reflecting properties, namely the opening 375, the inner wall of the side wall 302a and the inner walls of the side walls 302b,c,d.

It is furthermore possible for the collar 301 to be completely or partly transparent.

Furthermore, Fig. 9 shows how the virtual centre axis 395 of the collar 301, illustrated by a dashed line, encloses an angle α with the virtual vertical 396, illustrated by a dashed line, by means of a frame (not shown). The angle α is approximately 30 degrees. Placing the growing pot 7 at an angle to the collar-shaped protective device offers yet another possibility of influencing the growth direction and/or the growth process of the plant. In this case, the leaves 160, 160', 160", 160" and in particular the branches of the plant have a tendency to grow "upwards" and thus to orient themselves in a (vertical) direction. By orienting the aperture in the side wall 302a of the collar 301 higher than the centre axis which is at an angle, the amount of daylight or artificial light impinging directly on the plant is increased during use, as a result of which the growth direction and/or the growth process of the plant, in particular of the branch 170, can be influenced to an even greater degree.

Furthermore, the plant 100 may be rotated with respect to the collar 301 about the centre axis thereof in order to influence the growth direction and/or the growth process of the plant. Also, the angle α during the maturation process may be varied between 10-60 degrees, preferably 20-45 degrees in order to influence the growth direction and/or the growth process of the plant.

The oblique position by means of an angle α, as illustrated in Fig. 9, as well as the variation of the angle α during maturation of a plant may also be used in an advantageous way with the other protective devices illustrated in the figures, that is to say the collar 1, the collar 101 and the vase 201.

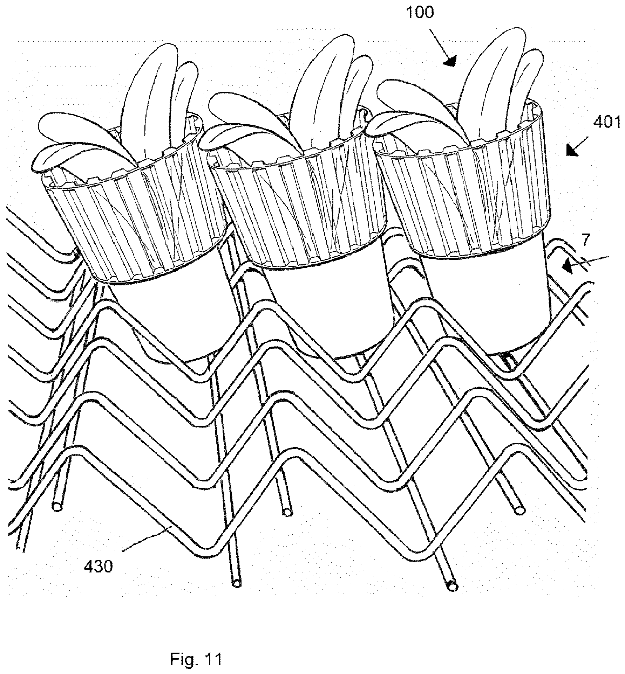

In particular when placing the protective device illustrated in Fig. 9 in an oblique position, the collar 301 may be provided with a further aperture in the side wall 302c in order to form an opening (not shown) therein on the side which is located opposite the side wall 302a which is provided with the opening 375. This second opening (not shown) is preferably smaller than the opening 375. By means of the second opening in the side wall 302c, it is ensured that a greater amount of light can impinge directly on an adjacent plant, which adjacent plant is also placed at an angle in an identical or virtually identical protective device, as is shown in Fig. 9. In this context, reference is made to the arrangement with the growing rack as illustrated in Fig. 11 to be discussed below.

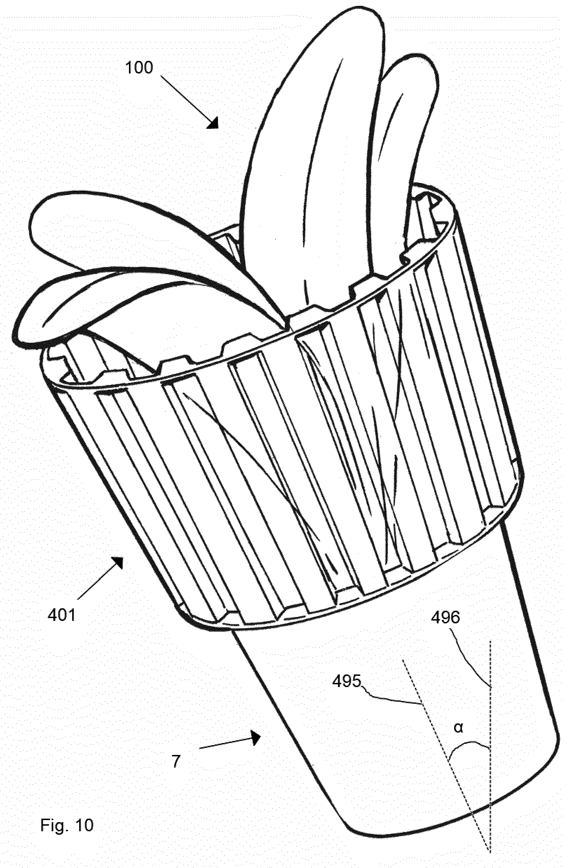

Figs. 10 and 11 show a perspective view of a fifth embodiment of a protective device in the form of a tubular collar 401 containing a diagrammatically illustrated growing orchid, more specifically a Phalaenopsis 100, with Fig. 11 furthermore showing a growing rack 430 by means of which a number of collars 401 with growing pot 7 with the centre axis 495 thereof can be positioned at an angle with respect to the vertical 496. Although the orientation of the plant 100 with respect to the collar 401 is possible, as is shown in Figs. 10 and 11, it is preferred to orient the plant 100 with respect to the collar 401 in such a way that, in the views illustrated in Figs. 10 and 11, the leaves of the plant are aligned in such a manner that the space for the branches is situated to the left and to the right of the centre axis 495 and the leaves, that is to say the space without leaves, is preferably situated above and below the centre axis 495.

The inner wall of the collar 401 may be provided with an invisible coating in order to provide the first section (not shown) of the inner wall and the second section (not shown) of the inner wall, which sections have mutually different light-reflecting properties.

By in this case orienting the collar in such a way that the surface portion which reflects light relatively well is situated on the top side, the effects of the sections of the collar 401 and the oblique positioning may amplify one another, provided that the angle α does not exceed 45 degrees. This applies both to the raising stage for the leaves and to the maturing stage for the branches.

The protective device may also have a different shape than the above-described collar and/or vase. It is for example possible to produce a hybrid variant of a collar and a vase, in which the upper part forms the collar part corresponding to the collars described and illustrated herein and the bottom part of the protective device which surrounds the growing pot is of a vase-like construction, which is formed, for example, from mutually connected strips with openings in between, which strips form the side wall and the bottom of the vase-like construction, on which bottom strips the growing pot can be positioned. A pouch-shaped or bag-shaped construction of the protective device is also possible, in which case an inner wall of the protective device which inner wall is directed above the growth medium towards the plant is provided with a first section and a second section, with the first section and the second section having mutually different light-reflecting properties for influencing the growth direction and/or the growth process of the plant.

In an alternative protective device which does not belong to the embodiment defined in the claims, the collar 401 may also be a conventional transparent collar 401 without an inner wall with a first section and a second section which have mutually different light-reflecting properties. Only by placing the plant 100 with the collar 401 obliquely at an angle with respect to the vertical is it possible to influence the growth direction and/or the growth process of the plant 100. With this method for maturation, the protective device already described above and illustrated in Fig. 9 which is provided with a tubular body with an aperture may be used in an advantageous way. This aperture is particularly advantageous for influencing the growth direction during maturation, that is to say the stage in which the branches of the plant start to grow.

## Claims

1. Protective device for protecting a plant to be raised in a pot containing growth medium, the protective device comprises a tubular body, such as a vase or a collar, which at least partly surrounds a plant growing in growth medium during use, wherein the tubular body comprises, at least above the growth medium, a plant-facing inner wall with a first section and a second section, wherein the first section and the second section have mutually different light-reflecting properties for influencing the growth direction and/or the growth process of the plant.

2. Protective device according to Claim 1, wherein the inner wall is provided with an inner surface, which inner surface comprises at least one first surface portion forming the first section and one second surface portion forming the second section, wherein the first surface portion and the second surface portion have mutually different light-reflecting properties, preferably the first surface portion is darker in colour than the second surface portion and/or the first surface portion has a matter surface than the second surface portion.

3. Protective device according to one or more of the preceding claims, wherein the tubular body has a cross-sectional plane which extends perpendicular to the centre axis thereof and does not comprise any corners, for example a circular or elliptic cross-sectional plane, or comprises a cross-sectional plane with corners, for example a rectangular or hexagonal cross-sectional plane.

4. Protective device according to one or more of the preceding claims, wherein the tubular body extends in a divergent manner in a direction of the centre axis thereof in a growth direction of a plant surrounded by the tubular body.

5. Protective device according to one or more of the preceding claims, wherein the first section and the second section are separated from each other by at least one dividing line, preferably two dividing lines, in order to form two sections which, viewed in the peripheral direction of the tubular body, are situated one behind the other.

6. Protective device according to one or more of the preceding claims, wherein the light-reflecting properties relate to the ratio of the incident light with respect to the reflected light, the direction of the light reflection and/or the colour or colours of the reflected light.

7. Protective device according to one or more of the preceding claims, wherein the different light-reflecting properties in the first section and the second section have been created by using different colours for the first section and the second section, for example the colour black for the first section and white for the second section or the colour blue for the first section and red for the second section.

8. Protective device according to one or more of the preceding claims, wherein, in terms of surface, the first section and the second section each extend over at least 25% of the inner wall of the tubular body.

9. Protective device according to one or more of the preceding claims, wherein the tubular body is injection-moulded by means of two-colour injection-moulding or is manufactured by means of in-mould labelling.

10. Protective device according to one or more of the preceding claims, wherein at least one section of the first and the second section is formed by an aperture in the tubular body which forms an opening in the tubular body through which light can impinge directly on the plant.

11. Protective device according to one or more of the preceding claims, wherein at least one section of the first and the second section is formed by fitting an element in front of or on the inner wall of the tubular body.

12. Protective device according to one or more of the preceding claims, wherein the tubular body is translucent, wherein at least one section of the first and the second section is formed by fitting an element for changing the light-reflecting properties between the first and the second section on an outer side of the tubular body.

13. Method for raising/maturing a plant to be raised/matured in a pot containing growth medium, preferably an orchid, in particular a Phalaenopsis, **characterized in that** a protective device according to one or more of the preceding claims is used with the method.

14. Method according to Claim 13, wherein the plant is turned with respect to the protective device between the raising and maturation about the centre axis, for example is turned by 180 degrees, prior to or at the start of the subsequent maturing stage.

15. Method according to Claim 13 or 14, wherein the plant and the protective device are positioned are positioned at an angle, that is to say to the centre axis, during raising/maturing of at least 10-60 degrees with respect to the vertical in order thus to influence the growth direction and/or the growth process of the branch/plant, preferably 20-45 degrees.
